# FASCICULE DE BREVET EUROPEEN

(11) **EP 2 222 503 B1**
(45) Date de publication et mention de la délivrance du brevet: **18.04.2012**
(21) Numéro de dépôt: 08854608.0
(22) Date de dépôt: 05.11.2008
(51) Int. Cl.: B60N 2/68

(54) **BANQUETTE ARRIERE DE VEHICULE AUTOMOBILE ET PROCEDE DE FABRICATION D'UNE TOLE DESTINEE A ETRE FIXEE SUR LA FACE ARRIERE DU DOSSIER D'UNE TELLE BANQUETTE**
RÜCKSITZ FÜR EIN AUTOMOBIL UND VERFAHREN ZUR HERSTELLUNG EINES METALLBLECHS ZUR ANBRINGUNG AN DER RÜCKSEITE DIESES RÜCKSITZES
REAR SEAT FOR AUTOMOBILE AND METHOD FOR MAKING A METAL SHEET TO BE ATTACHED TO THE REAR SURFACE OF THE BACK OF SAID SEAT

(30) Priorité: 23.11.2007 FR 0708208
(43) Date de publication de la demande: 01.09.2010
(73) Titulaire: Renault S.A.S., 92100 Boulogne-Billancourt (FR)
(72) Inventeur: DUVALLET, Patrick, F-78280 Guyancourt (FR); LOSSIE, Franck, F-91300 Massy (FR); KIERS, Marc, F-78720 La Celle les Bordes (FR)
(86) Numéro de dépôt international: PCT/FR2008/051999
(87) Numéro de publication internationale: WO 2009/068786

(56) Documents cités:
- EP-A- 1 338 466
- DE-A1- 4 402 864
- DE-A1-102006 000 850
- US-A- 4 493 505

## Description

La présente invention concerne une banquette arrière de véhicule automobile comprenant un dossier dont la face arrière est adjacente au compartiment des bagages, cette face arrière étant constituée par une tôle fixée à l'armature du dossier. Une telle banquette est connue du document US-A-4 493 505.

L'invention vise également un procédé de fabrication d'une tôle destinée à être fixée sur la face arrière d'un dossier d'une banquette arrière de véhicule automobile.

Dans le cas de nombreux véhicules automobiles, la banquette arrière comprend un dossier pouvant pivoter vers l'avant de manière à libérer une ouverture communiquant avec le compartiment des bagages, ce qui permet d'augmenter la longueur de l'espace disponible pour charger l'arrière du véhicule.

La tôle fixée à l'arrière du dossier a pour but de renforcer la face arrière du dossier pour résister à l'impact des objets contenus dans le compartiment arrière, notamment en cas de freinage brutal du véhicule.

Cette tôle doit également supporter la charge des objets lorsque le dossier est rabattu sur la banquette.

A cet effet, cette tôle doit présenter une raideur suffisante.

Dans les réalisations connues, cette tôle est renforcée par des nervures ou des cavités embouties.

Celles-ci augmentent la surface développée de la tôle et donc augmentent la masse de cette tôle.

Le but de la présente invention est de remédier à cet inconvénient, tout en permettant de diminuer les coûts de fabrication de ladite tôle.

Suivant l'invention, ce but est atteint, grâce à une banquette arrière de véhicule automobile comprenant un dossier dont la face arrière est adjacente au compartiment des bagages, cette face arrière étant constituée par une tôle fixée à l'armature du dossier, caractérisée en ce que ladite tôle comprend le long de deux côtés opposés une série d'éléments allongés découpés dans la tôle et séparés par des espaces vides, les extrémités des éléments allongés étant fixées à l'armature du dossier.

Les éléments allongés découpés dans chacun des deux côtés de la tôle, permettent d'alléger celle-ci, sans diminuer sa résistance aux impacts.

Dans un mode de réalisation, l'armature du dossier comprend un élément tubulaire supérieur et un élément tubulaire inférieur, lesdites extrémités des éléments découpés dans la tôle étant soudées auxdits éléments tubulaires.

De préférence, lesdits éléments allongés découpés dans la tôle s'étendent sur toute la longueur de chacun des deux côtés de la tôle.

Dans une réalisation particulièrement avantageuse de l'invention lesdits éléments découpés ont tous une forme et des dimensions identiques et les espaces vides compris entre lesdits éléments ont une forme et des dimensions identiques à ceux desdits éléments découpés, mais sont inversés par rapport à ces derniers.

Grâce à cette particularité, la fabrication de la tôle de la banquette selon l'invention peut être réalisée d'une manière très économique, sans chutes de tôle, grâce à un procédé dans lequel ladite tôle est découpée sur une bande de tôle continue, de façon que chaque découpe réalisée transversalement à la longueur de la bande de tôle réalise simultanément une série d'éléments allongés pour une première tôle et la série d'éléments allongés pour une seconde tôle.

Dans une version préférée de l'invention, lesdits éléments découpés ont la forme de triangles allongés dont le sommet est dirigé vers l'extérieur.

Selon une autre particularité de l'invention, la longueur desdits éléments découpés représente 10 à 60% de la largeur de la tôle

Selon une autre particularité avantageuse de l'invention, lesdits éléments découpés comportent chacun le long de leurs deux bords latéraux, une bordure emboutie pour augmenter la raideur desdits éléments.

Dans ce mode de réalisation, la section transversale de chaque élément découpé comprend une partie centrale rectiligne bordée de chaque côté par une partie emboutie comportant une première partie pliée sensiblement à angle droit reliée à une seconde partie pliée sensiblement à angle droit par rapport à la première partie.

Cette partie emboutie peut être réalisée en une seule opération de découpage et d'emboutissage sur une bande de tôle continue.

D'autres particularités et avantages de l'invention apparaîtront encore tout au long de la description ci-après.

L'invention est maintenant décrite en référence aux dessins annexés, non limitatifs, dans lesquels :
- la figure 1 est une vue de face d'une banquette arrière de véhicule automobile, dont la partie rembourrée du dossier a été enlevée pour montrer la tôle fixée sur la face arrière du dossier,
- la figure 2 montre deux tôles découpées dans une bande de tôle, destinées à équiper la face arrière de deux dossiers de banquette arrière,
- la figure 3 est une vue à échelle agrandie du détail A de la figure 2,
- la figure 4 est une vue en coupe suivant le plan IV-IV de la figure 3,
- la figure 5 est une vue en plan d'une bande continue de tôle dans laquelle plusieurs tôles ont été découpées.

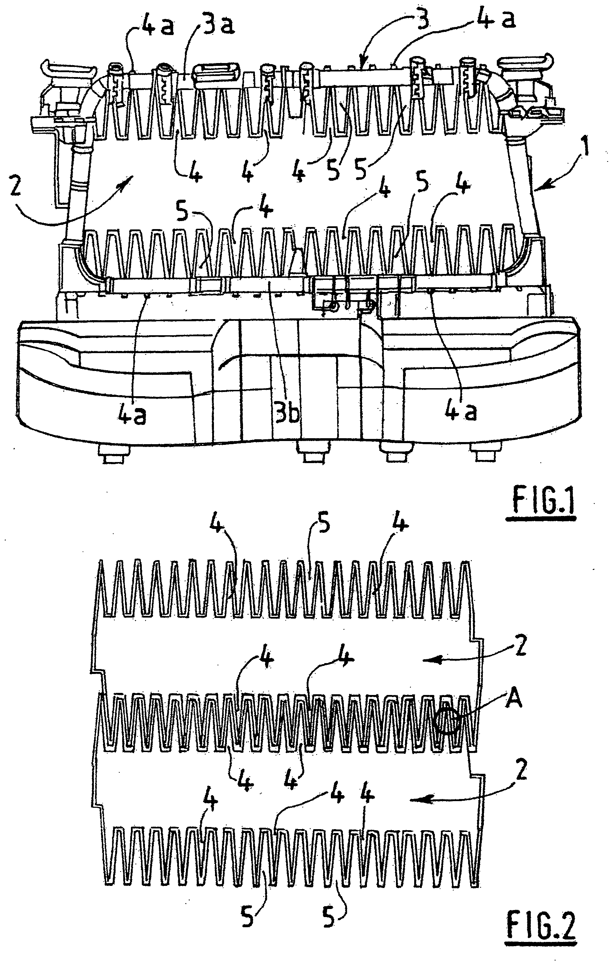

La figure 1 représente une banquette arrière de véhicule automobile comprenant un dossier 1 dont la face arrière est adjacente au compartiment des bagages.

Cette face arrière est constituée par une tôle 2 fixée à l'armature 3 du dossier.

Conformément à l'invention, la tôle 2 comprend le long de deux côtés opposés une série d'éléments allongés 4 découpés dans la tôle et séparés par des espaces vides 5, les extrémités 4a des éléments allongés 4 étant fixées à l'armature 3 du dossier 1. De préférence, les éléments allongés 4 sont situés sur les côtés opposés de la tôle s'étendant suivant le sens de la longueur de la tôle.

Dans l'exemple de la figure 1, l'armature 3 du dossier 1 comprend un élément tubulaire supérieur 3a et un élément tubulaire inférieur 3b, lesdites extrémités 4a des éléments découpés 4 dans la tôle 2 étant soudées aux éléments tubulaires 3a et 3b.

Par ailleurs, les éléments allongés 4 découpés dans la tôle 2 s'étendent sur toute la longueur de chacun des deux côtés de la tôle 2.

De plus dans l'exemple représenté les éléments découpés 4 ont tous une forme et des dimensions identiques et les espaces vides 5 compris entre les éléments 4 ont une forme et des dimensions identiques à ceux des éléments découpés 4, mais sont inversés par rapport à ces derniers.

En outre, dans cet exemple, les éléments découpés 4 ont la forme de triangles allongés dont le sommet 4a est dirigé vers l'extérieur.

De préférence, la longueur des éléments découpés 4 représente 10 à 60% de la largeur de la tôle 2, mesurée dans le sens de la hauteur du dossier 1.

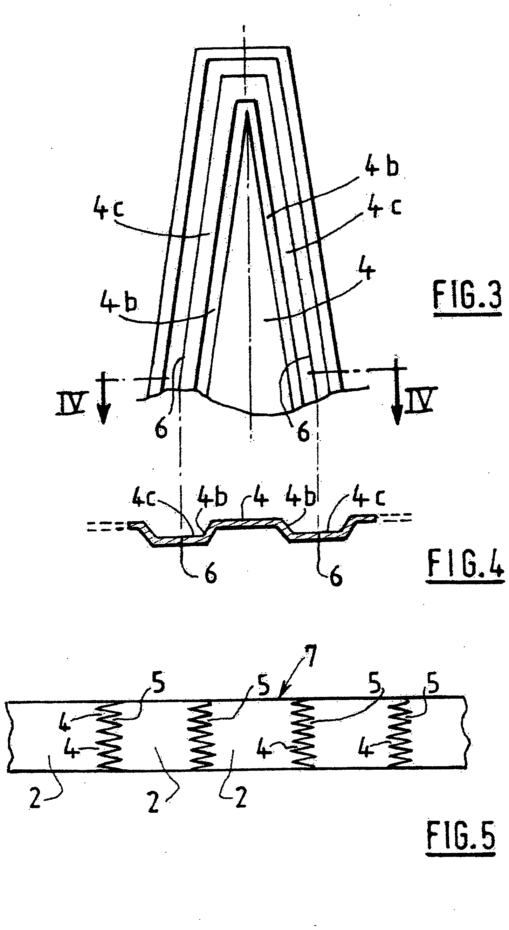

Par ailleurs, les figures 3 et 4 montrent que les éléments découpés 4 comportent chacun le long de leurs deux bords latéraux, une bordure 4b, 4c emboutie pour augmenter la raideur des éléments 4.

Sur ces figures 3 et 4 la ligne 6 représente la découpe réalisée sur une bande de tôle pour obtenir les deux tôles 2 représentées sur la figure 2.

La figure 4 montre que la section transversale de chaque élément découpé 4 comprend une partie centrale rectiligne 4 bordée de chaque côté par une partie emboutie comportant une première partie 4b pliée à angle droit reliée à une seconde partie 4c pliée à angle droit par rapport à la première partie 4b.

Pour fabriquer la tôle 4, celle-ci peut être découpée (voir figure 5) sur une bande de tôle continue 7, de façon que chaque découpe 5 réalisée transversalement à la longueur de la bande de tôle 7 réalise simultanément une série d'éléments allongés 4 pour une première tôle et la série d'éléments allongés 4 pour une seconde tôle.

Lors de chaque opération de découpe, on peut effectuer un emboutissage pour créer le long des deux bords longitudinaux de chaque élément allongé 4, la bordure emboutie 4b, 4c pour augmenter la raideur desdits éléments.

L'invention telle que décrite ci-dessus présente les principaux avantages suivants :
- les espaces vides 5 réalisés entre les éléments allongés découpés dans la tôle 2 permettent d'alléger celle-ci,
- la tôle 2 présente néanmoins une résistance suffisante à l'impact des objets contenus dans le compartiment à bagages, grâce à la bordure emboutie 4b, 4c qui borde les éléments découpés 4,
- la forme des éléments découpés 4 permet de réaliser dans une bande de tôle continue, une succession de tôles 2 identiques, sans chute de tôle, ce qui rend leur fabrication économique et particulièrement bien adaptée à une production en grande série.
- l'invention permet ainsi de réaliser une économie de masse d'environ 30% par rapport à une tôle dans laquelle des trous ont été découpés afin d'alléger la tôle.

## Revendications

1. Banquette arrière de véhicule automobile comprenant un dossier (1) dont la face arrière est adjacente au compartiment des bagages, cette face arrière étant constituée par une tôle (2) fixée à l'armature (3) du dossier (1), **caractérisée en ce que** ladite tôle (2) comprend le long de deux côtés opposés une série d'éléments allongés (4) découpés dans la tôle (2) et séparés par des espaces vides (5), les extrémités des éléments allongés étant fixées à l'armature (3) du dossier (1).

2. Banquette arrière selon la revendication 1, **caractérisée en ce que** l'armature (3) du dossier (1) comprend un élément tubulaire supérieur (3a) et un élément tubulaire inférieur (3b), lesdites extrémités des éléments découpés (4) dans la tôle (2) étant soudées auxdits éléments tubulaires (3a, 3b).

3. Banquette arrière selon l'une des revendications 1 ou 2, **caractérisée en ce que** lesdits éléments allongés (4) découpés dans la tôle (2) s'étendent sur toute la longueur de chacun des deux côtés de la tôle (2).

4. Banquette arrière selon l'une des revendications 1 à 3, **caractérisée en ce que** lesdits éléments découpés (4) ont tous une forme et des dimensions identiques et les espaces vides (5) compris entre lesdits éléments ont une forme et des dimensions identiques à ceux desdits éléments découpés (4), mais sont inversés par rapport à ces derniers.

5. Banquette arrière selon l'une des revendications 1 à 4, **caractérisée en ce que** lesdits éléments découpés (4) ont la forme de triangles allongés dont le sommet est dirigé vers l'extérieur.

6. Banquette arrière selon l'une des revendications 1 à 5, **caractérisée en ce que** la longueur des éléments découpés (4) représente 10 à 60% de la largeur de la tôle (2).

7. Banquette arrière selon l'une des revendications 1 à 6, **caractérisée en ce que** lesdits éléments découpés (4) comportent chacun le long de leurs deux bords latéraux, une bordure emboutie (4b, 4c) pour augmenter la raideur desdits éléments (4).

8. Banquette arrière selon la revendication 7, **caractérisée en ce que** la section transversale de chaque élément découpé (4) comprend une partie centrale rectiligne bordée de chaque côté par une partie emboutie comportant une première partie (4b) pliée sensiblement à angle droit reliée à une seconde partie (4c) pliée sensiblement à angle droit par rapport à la première partie (4b).

9. Procédé de fabrication d'une tôle destinée à être fixée sur la face arrière d'un dossier (1) d'une banquette arrière selon l'une des revendications 4 à 8, **caractérisé en ce que** ladite tôle (2) est découpée sur une bande de tôle continue (7), de façon que chaque découpe réalisée transversalement à la longueur de la bande de tôle (7) réalise simultanément une série d'éléments allongés (4) pour une première tôle et la série d'éléments allongés (4) pour une seconde tôle.

10. Procédé de fabrication selon la revendication 9, **caractérisé en ce que** lors de chaque opération de découpe, on effectue un emboutissage pour créer le long des deux bords longitudinaux de chaque élément allongé (4), une bordure emboutie (4b, 4c) pour augmenter la raideur desdits éléments (4).

## Claims

1. Rear seat for automobile comprising a back (1), the rear surface thereof being adjacent to the luggage compartment, said rear surface consisting of a metal sheet (2) attached to the frame (3) of the back (1), **characterized in that** said metal sheet (2) comprises, along the two opposing sides, a series of elongated elements (4) cut out of the metal sheet (2) and separated by empty spaces (5), the ends of the elongated elements being attached to the frame (3) of the back (1).

2. Rear seat according to Claim 1, **characterized in that** the frame (3) of the back (1) comprises an upper tubular element (3a) and a lower tubular element (3b), said ends of the elements (4) cut out of the metal sheet (2) being welded to said tubular elements (3a, 3b).

3. Rear seat according to one of Claims 1 or 2, **characterized in that** said elongated elements (4) cut out of the metal sheet (2) extend over the entire length of each of the two sides of the metal sheet (2).

4. Rear seat according to one of Claims 1 to 3, **characterized in that** said cut-out elements (4) all have an identical shape and dimensions and the empty spaces (5) between said elements have an identical shape and dimensions to those of said cut-out elements (4) but are reversed relative to said cut-out elements.

5. Rear seat according to one of Claims 1 to 4, **characterized in that** said cut-out elements (4) have an elongated triangular shape, the apex thereof being oriented to the outside.

6. Rear seat according to one of Claims 1 to 5, **characterized in that** the length of the cut-out elements (4) represents 10 to 60% of the width of the metal sheet (2).

7. Rear seat according to one of Claims 1 to 6, **characterized in that** said cut-out elements (4) each comprise along the two lateral edges thereof, a pressed flange (4b, 4c) to increase the rigidity of said elements (4).

8. Rear seat according to Claim 7, **characterized in that** the cross section of each cut-out element (4) comprises a rectangular central part bordered on each side by a pressed part comprising a first part (4b) folded substantially at right angles, connected to a second part (4c) folded substantially at right angles relative to the first part (4b).

9. Method for manufacturing a metal sheet to be attached to the rear surface of a back (1) of a rear seat according to one of Claims 4 to 8, **characterized in that** said metal sheet (2) is cut out of a continuous metal sheet strip (7), so that each cut-out made transversely to the length of the metal sheet strip (7) simultaneously creates a series of elongated elements (4) for a first metal sheet and the series of elongated elements (4) for a second metal sheet.

10. Manufacturing method according to Claim 9, **characterized in that** pressing is carried out during each cutting-out operation, to create along the two longitudinal edges of each elongated element (4) a pressed flange (4b, 4c) to increase the rigidity of said elements (4).

## Patentansprüche

1. Kraftfahrzeug-Rücksitzbank, mit einer Rückenlehne (1), deren hintere Fläche an den Kofferraum angrenzt, wobei diese hintere Fläche durch ein Blech (2) gebildet ist, das an der Bewehrung (3) der Rückenlehne (1) befestigt ist, **dadurch gekennzeichnet, dass** dieses Blech (2) längs zweier gegenüberliegender Seiten eine Reihe lang gestreckter Elemente (4) aufweist, die aus dem Blech (2) ausgestanzt sind und durch Leerräume (5) getrennt sind, wobei die Enden der lang gestreckten Elemente an der Bewehrung (3) der Rückenlehne (1) befestigt sind.

2. Rücksitzbank nach Anspruch 1, **dadurch gekennzeichnet, dass** die Bewehrung (3) der Rückenlehne (1) ein oberes rohrförmiges Element (3a) und ein unteres rohrförmiges Element (3b) aufweist, wobei die Enden der in dem Blech (2) ausgestanzten Elemente (4) an die rohrförmigen Elemente (3a, 3b) geschweißt sind.

3. Rücksitzbank nach einem der Ansprüche 1 oder 2, **dadurch gekennzeichnet, dass** sich die in dem Blech (2) ausgestanzten lang gestreckten Elemente (4) über die gesamte Länge jeder der zwei Seiten des Blechs (2) erstrecken.

4. Rücksitzbank nach einem der Ansprüche 1 bis 3, **dadurch gekennzeichnet, dass** die ausgestanzten Elemente (4) sämtlich die gleiche Form und die gleichen Abmessungen haben und die Leerräume (5) zwischen diesen Elementen die gleiche Form und die gleichen Abmessungen wie jene der ausgestanzten Elemente (4) haben, jedoch in Bezug auf diese Letzteren umgekehrt sind.

5. Rücksitzbank nach einem der Ansprüche 1 bis 4, **dadurch gekennzeichnet, dass** die ausgestanzten Elemente (4) die Form lang gestreckter Dreiecke haben, deren Scheitelpunkt nach außen orientiert ist.

6. Rücksitzbank nach einem der Ansprüche 1 bis 5, **dadurch gekennzeichnet, dass** die Länge der ausgestanzten Elemente (4) 10 bis 60 % der Breite des Blechs (2) repräsentiert.

7. Rücksitzbank nach einem der Ansprüche 1 bis 6, **dadurch gekennzeichnet, dass** die ausgestanzten Elemente (4) jeweils entlang ihrer zwei Seitenkanten einen gezogenen Rand (4b, 4c) aufweisen, um die Starrheit der Elemente (4) zu erhöhen.

8. Rücksitzbank nach Anspruch 7, **dadurch gekennzeichnet, dass** der Querschnitt jedes ausgestanzten Elements (4) einen geradlinigen Mittelteil aufweist, der an jeder Seite durch einen gezogenen Teil eingefasst ist, der einen im Wesentlichen rechtwinklig umgebogenen erste Teil (4b) aufweist, der mit einem in Bezug auf den ersten Teil (4b) im Wesentlichen rechtwinklig umgebogenen zweiten Teil (4c) verbunden ist.

9. Verfahren zum Herstellen eines Blechs, das dazu bestimmt ist, an der hinteren Fläche einer Rückenlehne (1) einer Rücksitzbank nach einem der Ansprüche 4 bis 8 befestigt zu werden, **dadurch gekennzeichnet, dass** das Blech (2) aus einem ununterbrochenen Blechstreifen in der Weise ausgestanzt wird, dass jeder Ausschnitt, der quer zu der Länge des Blechbandes (7) verwirklicht wird, gleichzeitig eine Reihe lang gestreckter Elemente (4) für ein erstes Blech und die Reihe lang gestreckter Elemente (4) für ein zweites Blech verwirklicht.

10. Herstellungsverfahren nach Anspruch 9, **dadurch gekennzeichnet, dass** in jedem Stanzvorgang ein Ziehen ausgeführt wird, um längs der zwei Längskanten jedes lang gestreckten Elements (4) einen gezogenen Rand (4b, 4c) zu erzeugen, um die Starrheit dieser Elemente (4) zu erhöhen.
